# EUROPEAN PATENT APPLICATION

(11) **EP 4 438 940 A1**
(43) Date of publication of application: **02.10.2024**
(21) Application number: 22898388.8
(22) Date of filing: 08.11.2022
(51) Int. Cl.: F17C 13/00

(54) **HYDROGEN RE-LIQUEFACTION SYSTEM**

(30) Priority: 24.11.2021 JP 2021190263
(71) Applicant: KAWASAKI JUKOGYO KABUSHIKI KAISHA, Kobe-shi, Hyogo 650-8670 (JP)
(72) Inventor: KARIYA, Daisuke, Hyogo 650-860 (JP); HARADA, Eiichi, Hyogo 650-860 (JP); NISHIMURA, Motohiko, Hyogo 650-860 (JP); MORIMOTO, Katsuya, Hyogo 650-860 (JP)
(74) Representative: EIP
(86) International application number: PCT/JP2022/041542
(87) International publication number: WO 2023/095604

(57) **Abstract**

This hydrogen re-liquefaction system re-liquefies boil-off gas produced in a liquid hydrogen tank into liquid hydrogen and returns the liquid hydrogen to the liquid hydrogen tank, and includes: a delivery passage through which hydrogen to be delivered from the liquid hydrogen tank to a supply destination flows; a re-liquefaction passage through which the boil-off gas flows; and a re-liquefaction device that cools the boil-off gas flowing through the re-liquefaction passage and condenses the boil-off gas. The re-liquefaction device is a magnetic refrigerator that includes: a condenser provided in the re-liquefaction passage; and a heat dissipator provided in the delivery passage, cools the boil-off gas via the condenser by demagnetization, and releases heat generated during magnetization to the hydrogen via the heat dissipator.

## Description

### Technical Field

The present invention relates to a hydrogen re-liquefaction system that re-liquefies boil-off gas produced in a liquid hydrogen tank into liquid hydrogen and returns the liquid hydrogen to the liquid hydrogen tank.

### Background Art

There are re-liquefaction systems that re-liquefy boil-off gas produced in a liquid hydrogen tank in which liquefied, low-temperature gas is stored. One known example of the re-liquefaction systems is the liquefied, low-temperature gas reservoir system disclosed in Patent Literature (PTL) 1. In the liquefied, low-temperature gas reservoir system disclosed in PTL 1, boil-off gas is compressed first. Subsequently, heat is exchanged between the compressed boil-off gas and gas to be delivered. Furthermore, the compressed boil-off gas is expanded using an expansion valve, and thus the boil-off gas is re-liquefied.

### Citation List

### Patent Literature

PTL 1: Japanese Laid-Open Patent Application Publication No. 2005-273681

### Summary of Invention

### Technical Problem

In the liquefied, low-temperature gas reservoir system disclosed in PTL 1, the boil-off gas is compressed and cooled. Furthermore, the compressed and cooled boil-off gas is expanded, and thus the boil-off gas is liquefied. Therefore, the efficiency of the re-liquefaction of the boil-off gas by the liquefied, low-temperature gas reservoir system is low.

Thus, an object of the present invention is to provide a hydrogen re-liquefaction system capable of re-liquefying boil-off gas with higher efficiency.

### Solution to Problem

A hydrogen re-liquefaction system according to the present invention is a hydrogen re-liquefaction system that re-liquefies boil-off gas produced in a liquid hydrogen tank into liquid hydrogen and returns the liquid hydrogen to the liquid hydrogen tank, and includes: a delivery passage through which hydrogen to be delivered from the liquid hydrogen tank to a supply destination flows; a re-liquefaction passage through which the boil-off gas flows; and a re-liquefaction device that cools the boil-off gas flowing through the re-liquefaction passage and condenses the boil-off gas, wherein: the re-liquefaction device is a magnetic refrigerator that includes: a condenser provided in the re-liquefaction passage; and a heat dissipator provided in the delivery passage, cools the boil-off gas via the condenser by demagnetization, and releases heat generated during magnetization to hydrogen via the heat dissipator.

According to the present invention, there are a condenser provided in the re-liquefaction passage and a heat dissipator provided in the delivery passage. Therefore, as a result of heat dissipation to the delivery passage which has an extremely low temperature relative to the temperature of the atmosphere, a magnetic refrigerator having a narrow operating temperature range can be applied to a re-liquefaction device. The magnetic refrigerator can cool boil-off gas and release heat to hydrogen by switching between demagnetization and magnetization. The use of such a magnetic refrigerator in a re-liquefaction device allows for removal of devices such as a compressor included in a gas type refrigerator. Therefore, in the re-liquefaction device, there is no need to drive a compressor or the like. Thus, the re-liquefaction device can perform re-liquefaction with higher efficiency than a gas refrigeration type re-liquefaction device.

### Advantageous Effects of Invention

According to the present invention, boil-off gas can be re-liquefied with higher efficiency.

The above object, other objects, features, and advantages of the present invention will be made clear by the following detailed explanation of preferred embodiments with reference to the attached drawings.

### Brief Description of Drawings

Fig. 1 is a circuit diagram illustrating a hydrogen re-liquefaction system according to Embodiment 1 of the present invention.
Fig. 2 is a circuit diagram illustrating a hydrogen re-liquefaction system according to Embodiment 2 of the present invention.

### Description of Embodiments

Hereinafter, hydrogen re-liquefaction systems (hereinafter referred to simply as "re-liquefaction systems") 1, 1A according to Embodiments 1, 2 of the present invention will be described with reference to the aforementioned drawings. Note that the concept of directions mentioned in the following description is used for the sake of explanation; the orientations, etc., of elements according to the invention are not limited to these directions. Each of the re-liquefaction systems 1, 1A described below is merely one embodiment of the present invention. Thus, the present invention is not limited to the embodiments and may be subject to addition, deletion, and alteration within the scope of the essence of the invention.

### [Embodiment 1]

### <Re-liquefaction System>

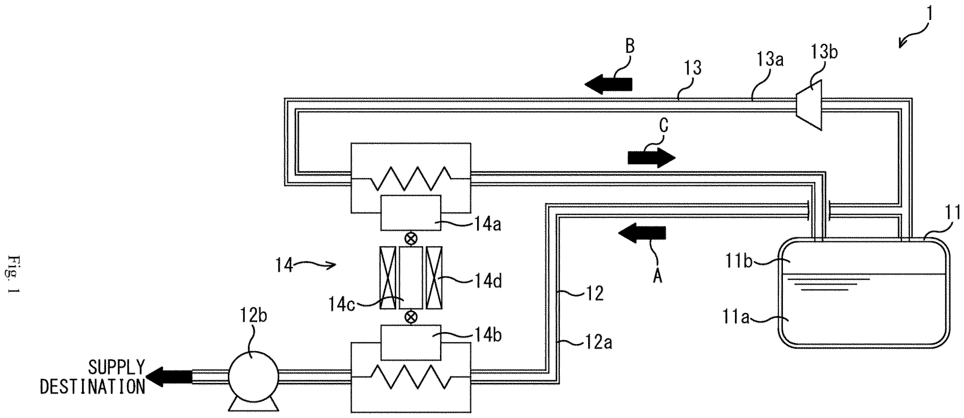

A re-liquefaction system 1 illustrated in Fig. 1 is provided in a liquid hydrogen storage facility where liquid hydrogen is stored. The re-liquefaction system 1 includes a liquid hydrogen tank 11. In the liquid hydrogen tank 11, liquefied hydrogen, that is, liquid hydrogen, is stored. In the liquid hydrogen tank 11, a portion of the liquid hydrogen is evaporated, and thus boil-off gas is produced. The re-liquefaction system 1 re-liquefies the boil-off gas produced in the liquid hydrogen tank 11. Subsequently, the re-liquefaction system 1 returns, to the liquid hydrogen tank 11, liquid hydrogen produced by re-liquefaction. More specifically, the re-liquefaction system 1 includes a gas delivery passage 12, a re-liquefaction passage 13, and a re-liquefaction device 14, in addition to said liquid hydrogen tank 11.

### <Liquid Hydrogen Tank>

The liquid hydrogen tank 11 is a container in which liquid hydrogen is stored as mentioned earlier. The liquid hydrogen tank 11 includes a vacuum insulation structure. Note that the liquid hydrogen tank 11 does not necessarily need to include the vacuum insulation structure. With the vacuum insulation structure, the inside of the liquid hydrogen tank 11 is maintained at a temperature lower than or equal to the saturation temperature of hydrogen. Meanwhile, in the liquid hydrogen tank 11, a portion of the liquid hydrogen is evaporated and thus boil-off gas is produced as mentioned earlier. Therefore, in the liquid hydrogen tank 11, the liquid hydrogen is stored in a lower space 11a, and the boil-off gas is stored in an upper space 11b.

### <Delivery Passage>

The gas delivery passage 12 is a passage through which hydrogen to be delivered from the liquid hydrogen tank 11 to a supply destination flows. In the present embodiment, the hydrogen to be delivered is the boil-off gas (hereinafter referred to as "delivery gas"). More specifically, one end of the gas delivery passage 12 is connected to the liquid hydrogen tank 11. In the present embodiment, one end of the gas delivery passage 12 is connected to the upper space 11b of the liquid hydrogen tank 11. Meanwhile, the other end of the gas delivery passage 12 is connected to a supply destination. The supply destination is a hydrogen consuming device such as a power generator and a hydrogen engine and a facility including the hydrogen consuming device. Note that the supply destination is not limited to the hydrogen consuming device and the facility including the hydrogen consuming device.

The gas delivery passage 12 includes an insulation structure 12a and a compressor 12b. The insulation structure 12a, which is one example of the first insulation structure, shuts off the heat input to the boil-off gas flowing through the gas delivery passage 12. The boil-off gas flowing through the gas delivery passage 12 is maintained at a temperature that is extremely low (that is close to the saturation temperature of hydrogen in the present embodiment) as with the internal temperature of the liquid hydrogen tank. The insulation structure 12a is a vacuum insulation pipe structure, for example. The compressor 12b compresses the delivery gas. More specifically, the compressor 12b compresses the boil-off gas at a pressure required at the supply destination. Subsequently, the compressor 12b sends the delivery gas to the supply destination.

### <Re-liquefaction Passage>

The re-liquefaction passage 13 allows the boil-off gas to flow therein. More specifically, the re-liquefaction passage 13 allows the passage of the boil-off gas to be re-liquefied. Furthermore, the re-liquefaction passage 13 returns, to the liquid hydrogen tank 11, the liquid hydrogen obtained by the re-liquefication. More specifically, both ends of the re-liquefaction passage 13 are connected to the liquid hydrogen tank 11. To describe in more detail, both ends of the re-liquefaction passage 13 are connected to the upper space 11b of the liquid hydrogen tank 11. Note that in the present embodiment, one end of the re-liquefaction passage 13 is connected to the gas delivery passage 12. The one end of the re-liquefaction passage 13 is connected to the upper space 11b of the liquid hydrogen tank 11 via the gas delivery passage 12.

The re-liquefaction passage 13 includes an insulation structure 13a and a blower 13b. The insulation structure 13a, which is one example of the second insulation structure, shuts off the heat input to the boil-off gas flowing through the re-liquefaction passage 13. The boil-off gas flowing through the re-liquefaction passage 13 is maintained at a temperature that is extremely low (that is close to the saturation temperature of hydrogen in the present embodiment) as with the internal temperature of the liquid hydrogen tank. The insulation structure 13a is a vacuum insulation pipe structure, for example. The blower 13b draws the boil-off gas from the liquid hydrogen tank 11. More specifically, the blower 13b draws, into re-liquefaction passage 13, a portion of the boil-off gas brought from the upper space 11b of the liquid hydrogen tank 11 to the gas delivery passage 12. Subsequently, blower 13b sends the boil-off gas to an area located downstream of the blower 13b in the re-liquefaction passage 13.

### <Re-liquefaction Device>

The re-liquefaction device 14 cools the boil-off gas flowing through the re-liquefaction passage 13. By cooling the boil-off gas, the re-liquefaction device 14 condenses the boil-off gas into liquid hydrogen. More specifically, the re-liquefaction device 14 cools the boil-off gas flowing through the re-liquefaction passage 13 to a temperature lower than or equal to the saturation temperature of hydrogen. As a result, at least a portion of the boil-off gas flowing through the re-liquefaction passage 13 is condensed into liquid hydrogen. The re-liquefaction device 14 including such a function is a magnetic refrigerator. Next, the re-liquefaction device 14, which is a magnetic refrigerator, will be described in further detail.

The re-liquefaction device 14 includes a condenser 14a and a heat dissipator 14b. The condenser 14a is provided in the re-liquefaction passage 13. More specifically, the condenser 14a is disposed on the downstream side of the blower 13b in the re-liquefaction passage 13. The re-liquefaction device 14 cools the boil-off gas via the condenser 14a by demagnetization. The heat dissipator 14b is provided in the gas delivery passage 12. More specifically, in the gas delivery passage 12, the heat dissipator 14b is disposed closer to the supply destination side than the re-liquefaction passage 13 is. Subsequently, the re-liquefaction device 14 releases heat generated during magnetization to hydrogen via the heat dissipator 14b.

More specifically, the re-liquefaction device 14 is configured as follows, for example. Note that the following example is one example of the configuration of the re-liquefaction device 14. Therefore, the re-liquefaction device 14 is not limited to being configured as follows. Specifically, it is sufficient that the re-liquefaction device 14 be configured to be able to cool the boil-off gas by demagnetization and release the heat generated during magnetization to the delivery gas as described earlier. The re-liquefaction device 14 further includes a heat medium 14c and a magnetic field generator 14d, for example. The heat medium 14c is made from a magnetic material. The heat medium 14c is cooled by demagnetization and generates heat by magnetization. The magnetic field generator 14d produces a magnetic field around the heat medium 14c and thereby magnetizes the heat medium 14c. Furthermore, the magnetic field generator 14d demagnetizes the heat medium 14c by removing the magnetic field around the heat medium 14c. The magnetic field generator 14d is a coil or a permanent magnet, for example. In the case where the magnetic field generator 14d is a coil, the magnetic field generator 14d produces and removes a magnetic field around the heat medium 14c by turning ON and OFF an electric current flowing to the coil. When the magnetic field is removed, the heat medium 14c is cooled, and therefore the condenser 14a absorbs heat from the boil-off gas. When the magnetic field is produced, the temperature of the heat medium 14c increases, and therefore the heat generated is released from the heat dissipator 14b to the delivery gas together with the heat absorbed earlier. Thus, the heat can be transported from the condenser 14a to the heat dissipator 14b via the heat medium 14c. When the magnetic field generator 14d is a permanent magnet, the magnetic field generator 14d can produce and remove a magnetic field around the heat medium 14c by moving the permanent magnet toward and away from the heat medium 14c. Thus, the heat medium 14c is cooled. And the heat can be transported from the condenser 14a to the heat dissipator 14b via the heat medium 14c.

Furthermore, in the re-liquefaction device 14, the heat medium 14c is thermally connected to the condenser 14a during demagnetization. Thus, the re-liquefaction device 14 cools the boil-off gas flowing through the re-liquefaction passage 13 via the condenser 14a. On the other hand, in the re-liquefaction device 14, the heat medium 14c is thermally connected to the heat dissipator 14b during magnetization. Thus, the re-liquefaction device 14 can release the heat generated during magnetization from the heat dissipator 14b to the boil-off gas flowing through the gas delivery passage 12. And the heat medium 14c can be cooled via the heat dissipator 14b. When the heat medium 14c that has been cooled is demagnetized again, the heat medium 14c is further cooled. When the heat medium 14 being further cooled is thermally connected to the condenser 14a, the boil-off gas can be cooled via the condenser 14a. Thus, the boil-off gas is cooled using the condenser 14a. In this manner, by repeating demagnetization and magnetization, the re-liquefaction device 14 can keep cooling the boil-off gas flowing through the re-liquefaction passage 13.

Furthermore, the re-liquefaction device 14 sets the temperature of the condenser 14a to a temperature lower than the saturation temperature of hydrogen. More specifically, the condenser 14a is thermally connected to the boil-off gas having an extremely low temperature, for example, and therefore has an extremely low temperature. Furthermore, since the condenser 14a is cooled by the demagnetization action in the re-liquefaction device 14, the temperature of the condenser 14a is lower than the saturation temperature of hydrogen. Therefore, the temperature of the condenser 14a is lower than the saturation temperature of hydrogen corresponding to the internal pressure of the liquid hydrogen tank 11, that is, the pressure of the boil-off gas. This allows the condenser 14a to condense, into liquid hydrogen, at least a portion of the boil-off gas flowing through the re-liquefaction passage 13. Note that the temperature of the condenser 14a is a mere example and therefore is not limited to this temperature range.

In the re-liquefaction device 14, the temperature of the heat dissipator 14b is higher than the temperature of the condenser 14a. More specifically, the heat generated during magnetization is released from the heat dissipator 14b, and therefore the temperature of the heat dissipator 14b is higher than the temperature of the condenser 14a. On the other hand, the delivery gas to which the heat dissipator 14b releases the heat is maintained at an extremely low temperature because the gas delivery passage 12 in which the heat dissipator 14b is provided includes the insulation structure 12a. For example, the heat dissipator 14b has an extremely low temperature between 20 K and 70 K, inclusive, in the present embodiment. Therefore, in the re-liquefaction device 14, the temperature difference between the heat dissipator 14b and the condenser 14a can be 50 K or lower. Thus, after the heat of the heat dissipator 14b is released to the delivery gas, the temperature of the condenser 14a can be reduced to a temperature lower than the saturation temperature at the time of cooling the condenser 14a by demagnetization. This means that the temperature difference between the heat dissipator 14b and the condenser 14a can be kept within the operating range of the magnetic refrigerator.

### <Operation of Re-liquefaction System>

In the re-liquefaction system 1, when the compressor 12b in the gas delivery passage 12 operates, the delivery gas is delivered from the liquid hydrogen tank 11 to the supply destination (refer to the arrow A in Fig. 1). Furthermore, in the re-liquefaction system 1, the blower 13b in the re-liquefaction passage 13 also operates. Thus, the boil-off gas in the liquid hydrogen tank 11 flows to the re-liquefaction passage 13 as well. More specifically, a portion of the boil-off gas flowing through the gas delivery passage 12 is drawn into the re-liquefaction passage 13 by the blower 13b. Furthermore, the blower 13b sends the drawn boil-off gas to the re-liquefaction device 14 located on the downstream side (refer to the arrow B in Fig. 1).

The re-liquefaction device 14 cools the condenser 14a by demagnetization. Furthermore, the re-liquefaction device 14 releases the heat generated during magnetization to the delivery gas via the heat dissipator 14b. Thus, the temperature of the condenser 14a is maintained at a temperature lower than or equal to the saturation temperature of hydrogen, that is, 30 K, in the present embodiment. And at least a portion of the boil-off gas flowing through the re-liquefaction device 14 is condensed into liquid hydrogen. The liquid hydrogen obtained by the condensation is returned to the liquid hydrogen tank 11 through the re-liquefaction passage 13 along with the remaining boil-off gas. In this manner, the re-liquefication system 1 re-liquefies the boil-off gas produced in the liquid hydrogen tank 11 into liquid hydrogen and returns the liquid hydrogen to the liquid hydrogen tank 11 (refer to the arrow C in Fig. 1).

The re-liquefaction system 1 according to the present embodiment includes: the condenser 14a provided in the re-liquefaction passage 13; and the heat dissipator 14b provided in the gas delivery passage 12. Therefore, as a result of heat dissipation to the gas delivery passage 12 which has an extremely low temperature relative to the temperature of the atmosphere, a magnetic refrigerator having a narrow operating temperature range can be applied to the re-liquefaction device 14. The magnetic refrigerator can cool the boil-off gas and release heat to the delivery gas by switching between demagnetization and magnetization. The use of such a magnetic refrigerator in the re-liquefaction device 14 allows for removal of devices such as a compressor included in a gas-type refrigerator. Therefore, in the re-liquefaction device 14, there is no need to drive a compressor or the like; thus, the re-liquefaction device 14 can perform re-liquefaction with higher efficiency than a gas refrigeration type re-liquefaction device. Furthermore, since devices such as a compressor can be removed, the re-liquefaction device 14 can be reduced in size.

In the re-liquefaction system 1, the heat dissipator 14b releases heat to the delivery gas delivered from the liquid hydrogen tank 11 as with the boil-off gas to be re-liquefied. Therefore, the temperature difference between the condenser 14a and the heat dissipator 14b can be made small. Thus, it is possible to reduce the increase in the complexity of the configuration of the re-liquefaction device 14. More specifically, if there is a large temperature difference between the condenser 14a and the heat dissipator 14b, a large number of refrigerators need to be provided between the condenser 14a and the heat dissipator 14b, meaning that the re-liquefaction device will have a complex configuration. When the temperature difference between the condenser 14a and the heat dissipator 14b is small, a single magnetic refrigerator can constitute the re-liquefaction device 14, for example. Therefore, it is possible to further reduce the increase in the complexity of the configuration of the re-liquefaction device 14. However, this does not exclude that the re-liquefaction device 14 includes more than one magnetic refrigerator.

Furthermore, in the re-liquefaction system 1, the re-liquefaction passage 13 is formed so as to branch off from the gas delivery passage 12. In the gas delivery passage 12, the heat dissipator 14b is disposed on the supply destination side (in other words, on the downstream side) of a portion at which the re-liquefaction passage 13 is connected to the gas delivery passage 12. Therefore, the boil-off gas to be re-liquefied can be brought to the re-liquefaction passage 13 without passing through the heat dissipator 14b. Thus, the boil-off gas to be re-liquefied does not absorb the heat released at the heat dissipator 14b. Therefore, it is possible to pass, to the re-liquefaction passage 13, the boil-off gas having a low temperature as compared to the case where the heat dissipator 14b is disposed on the upstream side in the re-liquefaction passage 13. Thus, the boil-off gas flowing through the re-liquefaction passage 13 can be kept at a low temperature. As a result, the temperature to be reduced at the time of re-liquefaction can be made small.

Furthermore, in the re-liquefaction system 1, since the gas delivery passage 12 and the re-liquefaction passage 13 include the insulation structure 12a and the insulation structure 13a, respectively, the hydrogen and the boil-off gas can be maintained at extremely low temperatures and brought to the heat dissipator 14b and the condenser 14a. By setting the temperature of the condenser 14a to lower than the saturation temperature of hydrogen, it is possible to re-liquefy the boil-off gas. Furthermore, by setting the temperature of the heat dissipator 14b higher than the temperature of the condenser 14a and setting the temperature difference between the heat dissipator 14b and the condenser 14a to 40 K or lower, the temperature difference can be within the operating range of the magnetic refrigerator. Thus, it is possible to reduce the increase in the complexity of the configuration of the re-liquefaction device 14.

### <Embodiment 2>

A re-liquefaction system 1A according to Embodiment 2 has a configuration similar to the configuration of the re-liquefaction system 1 according to Embodiment 1. Therefore, the following discussion will focus on elements of the re-liquefaction system 1A according to Embodiment 2 that are different from those of the re-liquefaction system 1 according to Embodiment 1; elements of the re-liquefaction system 1A according to Embodiment 2 that are the same as those of the re-liquefaction system 1 according to Embodiment 1 are assigned the same reference signs and as such, description of the elements will be omitted.

The re-liquefaction system 1A according to Embodiment 2 includes the liquid hydrogen tank 11, a liquid delivery passage 12A, a re-liquefaction passage 13A, and the re-liquefaction device 14. The liquid delivery passage 12A is a passage through which hydrogen to be delivered from the liquid hydrogen tank 11 to a supply destination flows. In the present embodiment, the hydrogen to be delivered is liquid hydrogen (hereinafter referred to as "delivery liquid").

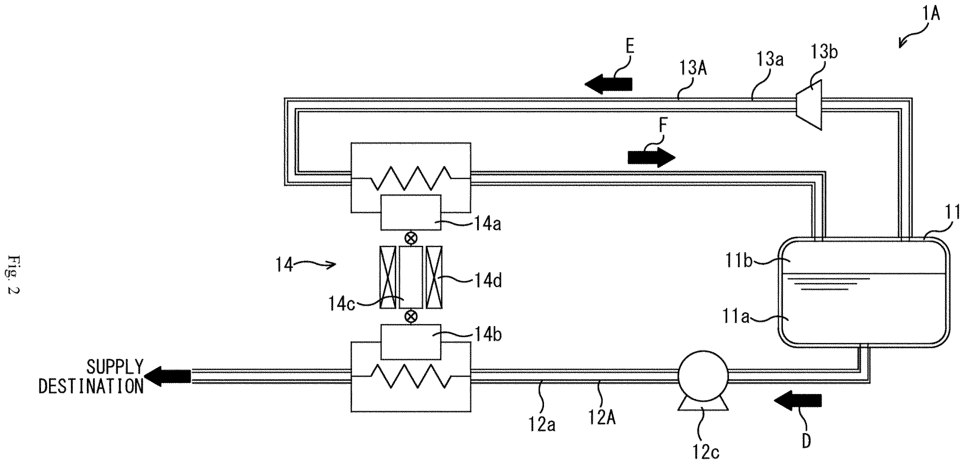

More specifically, one end of the liquid delivery passage 12A is connected to the liquid hydrogen tank 11. In the present embodiment, one end of the liquid delivery passage 12A is connected to the lower space 1 1a of the liquid hydrogen tank 11. Meanwhile, the other end of the liquid delivery passage 12A is connected to the supply destination. The liquid delivery passage 12A includes the insulation structure 12a and a pump 12c. The pump 12c sends, toward the supply destination, the delivery liquid brought from the liquid hydrogen tank 11 and flowing through the liquid delivery passage 12A. Note that the liquid delivery passage 12A includes a heat exchanger not illustrated in the drawings. The liquid delivery passage 12A vaporizes the delivery liquid by the heat exchanger heating the delivery liquid. A facility including the re-liquefaction system 1A supplies, to the supply destination, hydrogen gas obtained by the vaporization (refer to the arrow D in Fig. 2).

In the re-liquefaction passage 13A, both ends of the re-liquefaction passage 13A are connected to the liquid hydrogen tank 11. To describe in more detail, both ends of the re-liquefaction passage 13A are connected to the upper space 11b of the liquid hydrogen tank 11. Note that in Fig. 2, the re-liquefaction passage 13A is directly connected to the upper space 11b of the liquid hydrogen tank 11, but may be connected to the liquid hydrogen tank 11 via the gas delivery passage 12 not illustrated in the drawing, as with the re-liquefaction passage 13 according to Embodiment 1. The re-liquefaction passage 13A includes the blower 13b.

In the re-liquefaction device 14, the condenser 14a is provided in the re-liquefaction passage 13A, and the heat dissipator 14b is provided in the liquid delivery passage 12A. In the liquid delivery passage 12A, the heat dissipator 14b is disposed closer to the supply destination than the pump 12c is. More specifically, the heat dissipator 14b is disposed on the upstream side of the heat exchanger (not illustrated in the drawings) in the liquid delivery passage 12A.

In the re-liquefaction system 1A, when the pump 12c in the liquid delivery passage 12A operates, the delivery liquid is delivered from the liquid hydrogen tank 11 to the liquid delivery passage 12A (refer to the arrow D in Fig. 2). Furthermore, in the re-liquefaction passage 13A, the blower 13b sends the boil-off gas to the re-liquefaction device 14 (refer to the arrow E in Fig. 2). In the re-liquefaction device 14, the condenser 14a is cooled by demagnetization, and the heat generated during magnetization is released to the delivery liquid via the heat dissipator 14b. Thus, at least a portion of the boil-off gas flowing through the re-liquefaction device 14 is condensed into liquid hydrogen. Subsequently, the liquid hydrogen obtained by the condensation is returned to the liquid hydrogen tank 11 through the re-liquefaction passage 13A along with the remaining boil-off gas. In this manner, in the re-liquefaction system 1A, the boil-off gas produced in the liquid hydrogen tank 11 is re-liquefied and returned to the liquid hydrogen tank 11 (refer to the arrow F in Fig. 2).

In the re-liquefaction system 1A according to the present embodiment, the heat dissipator 14b releases heat to the liquid hydrogen having a lower temperature than the boil-off gas. Therefore, the temperature difference between the condenser 14a and the heat dissipator 14b can be made small, and the increase in the complexity of the configuration of the magnetic refrigerator can be reduced.

The re-liquefaction system 1A according to Embodiment 2 produces advantageous effects that are substantially the same as those produced by the re-liquefaction system 1 according to Embodiment 1.

### <Other Embodiments>

The re-liquefaction systems 1, 1A according to Embodiments 1, 2 are provided in a liquid hydrogen storage facility, but a facility in which the re-liquefaction systems 1, 1A are provided is not necessarily limited to the liquid hydrogen storage facility. For example, the re-liquefaction systems 1, 1A may be provided in vehicles such as boats or vessels and cars or may be provided in other devices.

In the re-liquefaction system 1 according to Embodiment 1, the heat dissipator 14b is disposed in the gas delivery passage 12, closer to the supply destination than the re-liquefaction passage 13 is. However, the heat dissipator 14b may be disposed in the gas delivery passage 12, closer to the liquid hydrogen tank 11 than the re-liquefaction passage 13 is. In the re-liquefaction system 1A according to Embodiment 2, the heat dissipator 14b is disposed on the upstream side of the heat exchanger (not illustrated in the drawings) on the downstream side of the pump 12c in the liquid delivery passage 12A. However, the heat dissipator 14b may be disposed on the upstream side of the pump 12c.

Furthermore, in the re-liquefaction systems 1, 1A according to Embodiments 1, 2, the re-liquefaction device 14 which is a magnetic refrigerator does not necessarily need to be configured as described earlier. Specifically, it is sufficient that the re-liquefaction device 14 cool the boil-off gas via the condenser 14a by demagnetization and release the heat generated during magnetization to the delivery gas or the delivery liquid via the heat dissipator 14b.

From the foregoing description, many modifications and other embodiments of the present invention would be obvious to a person having ordinary skill in the art. Therefore, the foregoing description should be interpreted only as an example and is provided for the purpose of teaching the best mode for carrying out the present invention to a person having ordinary skill in the art. Substantial changes in details of the structures and/or functions of the present invention are possible within the spirit of the present invention.

## Claims

1. A hydrogen re-liquefaction system that re-liquefies boil-off gas produced in a liquid hydrogen tank into liquid hydrogen and returns the liquid hydrogen to the liquid hydrogen tank, the hydrogen re-liquefaction system comprising:
a delivery passage through which hydrogen to be delivered from the liquid hydrogen tank to a supply destination flows;
a re-liquefaction passage through which the boil-off gas flows; and
a re-liquefaction device that cools the boil-off gas flowing through the re-liquefaction passage and condenses the boil-off gas, wherein:
the re-liquefaction device is a magnetic refrigerator that includes: a condenser provided in the re-liquefaction passage; and a heat dissipator provided in the delivery passage, cools the boil-off gas via the condenser by demagnetization, and releases heat generated during magnetization to hydrogen via the heat dissipator.

2. The hydrogen re-liquefaction system according to claim 1, wherein:
the boil-off gas that is the hydrogen to be delivered from the liquid hydrogen tank to the supply destination flows through the delivery passage; and
the magnetic refrigerator releases the heat to the boil-off gas flowing through the delivery passage via the heat dissipator.

3. The hydrogen re-liquefaction system according to claim 2, wherein:
the delivery passage is connected to the liquid hydrogen tank;
the re-liquefaction passage is connected to the liquid hydrogen tank via the delivery passage; and
in the delivery passage, the heat dissipator of the re-liquefaction device is disposed closer to the supply destination than the re-liquefaction passage is.

4. The hydrogen re-liquefaction system according to claim 1, wherein:
the liquid hydrogen that is the hydrogen to be delivered from the liquid hydrogen tank to the supply destination flows through the delivery passage; and
the re-liquefaction device releases the heat to the liquid hydrogen flowing through the delivery passage via the heat dissipator.

5. The hydrogen re-liquefaction system according to any one of claims 1 to 4, wherein:
the delivery passage includes a first insulation structure that shuts off heat input to the hydrogen;
the re-liquefaction passage includes a second insulation structure that shuts off heat input to the boil-off gas; and
the re-liquefaction device sets a temperature difference between the heat dissipator and the condenser to lower than or equal to 50 K by setting a temperature of the condenser to lower than a saturation temperature of the hydrogen and lower than or equal to 30 K and setting a temperature of the heat dissipator to higher than or equal to 20 K and higher than the temperature of the condenser.
